# EUROPÄISCHE PATENTSCHRIFT

(11) **EP 1 989 659 B1**
(45) Veröffentlichungstag und Bekanntmachung des Hinweises auf die Patenterteilung: **21.03.2012**
(21) Anmeldenummer: 07711660.6
(22) Anmeldetag: 23.02.2007
(51) Int. Cl.: G06K 7/14, G06K 1/12, G01N 35/02, G06K 19/06, G01N 35/00

(54) **ANALYTISCHES VERBRAUCHSMITTEL UND ANORDNUNG ZUM AUSLESEN VON INFORMATIONEN**
ANALYTIC CONSUMABLE MEANS AND DEVICE FOR READING INFORMATION
CONSOMMABLE ANALYTIQUE ET DISPOSITIF DE LECTURE D'INFORMATIONS

(30) Priorität: 25.02.2006 EP 06003880
(43) Veröffentlichungstag der Anmeldung: 12.11.2008
(73) Patentinhaber: F.Hoffmann-La Roche AG, 4070 Basel (CH); Roche Diagnostics GmbH, 68305 Mannheim (DE)
(72) Erfinder: HARTTIG, Herbert, 67434 Neustadt (DE); LIST, Hans, 64754 Hesseneck-Kailbach (DE); ROESICKE, Bernd, 68305 Mannheim (DE); KOCHERSCHEIDT, Gerrit, 69126 Heidelberg (DE); THOES, Bruno, 66287 Quierschied (DE); ASFOUR, Jean-Michel, 69469 Weinheim (DE)
(74) Vertreter: Pfiz, Thomas
(86) Internationale Anmeldenummer: PCT/EP2007/001605
(87) Internationale Veröffentlichungsnummer: WO 2007/096191

(56) Entgegenhaltungen:
- DE-A1- 10 360 786
- DE-B3-102004 051 124
- US-A- 4 105 926
- US-A- 4 263 504
- US-A- 4 577 099
- US-A- 4 786 792
- US-A- 5 203 591
- US-A1- 2002 030 817
- US-B1- 6 234 392
- PATENT ABSTRACTS OF JAPAN Bd. 008, Nr. 252 (P-314), 17. November 1984 (1984-11-17) & JP 59 121578 A (FUJITSU KK), 13. Juli 1984 (1984-07-13)

## Beschreibung

Die Erfindung betrifft ein Analysesystem, insbesondere tragbares Blutzuckermessgerät, mit mindestens einer Testeinheit als Verbrauchsmittel zur Applikation einer Probe, einem Informationsträger, welcher einen durch grafische Zeichen gebildeten zweidimensionalen Code zur maschinenlesbaren Bereitstellung von testspezifischen Informationen umfasst, und einer optischen Leseeinrichtung für den Code.

Ein Code wird üblicherweise dann eingesetzt, wenn zusammen mit einem Gegenstand Informationen weiter gegeben werden, Wird der Gegenstand in irgendeiner Weise automatisch gehandhabt, dann sind maschinenlesbare Codes bevorzugt. Besonders bevorzugt sind optisch auslesbare Codes, weil die Codes durch Druckverfahren preiswert und schnell hergestellt werden können. Einfache maschinenlesbare Symbole sind Felder mit ausreichend hohem Kontrast. Während ein einzelnes schwarzes oder weißes Feld nur einen Informationsgehalt von 1 bit besitzt, führte die Notwendigkeit, größere Informationsmengen maschinenlesbar zu machen, zur Entwicklung von so genannten Barcodes. Das sind Striche oder Balken, die in definierter Stärke und mit definiertem Abstand voneinander stehend eine gewisse, beschränkte Datenmenge kodieren können. Der Bedarf zur Übermittlung größerer Datenmengen führte zur Entwicklung von zweidimensionalen Codes (2D-Codes). Diese unterscheiden sich bezüglich der Datenmenge, der Größe, der notwendigen Kontraste und der Anforderungen an die Druckqualität bzw. Leseleistung. Im Bereich der Analytik können solche Informationsträger dazu dienen, chargenspezifische Informationen, wie den Zusammenhang zwischen Analyt und Signal, maschinenlesbar bereit zu stellen. Ein Beispiel dafür ist die Teststreifen-Trommel des Blutglucose-Messsystems ACCU-CHEK Compact der Anmelderin, auf der ein Barcode mit testspezifischen Informationen automatisch ausgelesen wird, wie es in DE 10360786 A1 beschrieben ist. DE 103 60 786 A1 bildet den Oberbegriff des Anspruchs 1. Aus der DE 10 2004 051 124 B3 ist ein Verfahren zur Einzelstückverfolgung metallischer Hohlkörper in einer Fertigungs- und Prüfstrecke bekannt, bei dem eine unverwechselbare Identifizierung in mehrfacher identischer Wiederholung vollumfänglich auf den Rohrumfang aufgebracht wird. Dabei soll wegen der Kleinflächigkeit des Codes eine Einzelidentifizierung mittels eines oder mehrerer Kamerasysteme möglich sein.

Ausgehend hiervon liegt der Erfindung die Aufgabe zugrunde, die im Stand der Technik bekannten Mittel bzw. Systeme weiter zu verbessern, insbesondere mit einfachen Mitteln eine zuverlässige Codierung und Auswertung zu gewährleisten.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Ein Erfindungsaspekt besteht darin, einen bezüglich der Auslesung positionstoleranten Code zu schaffen. Dementsprechend wird vorgeschlagen, dass der Code eine die Informationen enthaltende Basiscodefläche und mindestens eine vorzugsweise unmittelbar daran angrenzende, die Information zumindest eines Ausschnitts der Basiswdefläche vervielfältigende Kopiecodefläche aufweist, wobei die mindestens eine Kopiecodefläche an die Basiscodefläche randseitig anschließt und die Ausdehnung des Codes so groß ist, dass der Erfassungsbereich eines den Code erfassenden Sensors der Leseeinrichtung nicht über den Rand des Codes hinausragt. Auf diese Weise ist es möglich, den Code auch dann vollständig auf einer begrenzten Sensorfläche zu erfassen, wenn größere gegenseitige Positioniertoleranzen bestehen. Dies ist vor allem bei kompakten Handgeräten der Fall, bei denen analytische Verbrauchsmittel vom Benutzer ausgewechselt werden. Durch den positionstoleranten Code ist es möglich, kleinere und damit kostengünstigere Sensorbausteine einzusetzen. Ebenso können einfachere und kostengünstigere Fertigungsverfahren für den Informationsträger, dessen Anbringung am Verbrauchsmittel und für die Geräte zur Aufnahme der Verbrauchsmittel angewandt werden.

Vorteilhafterweise ist die vorzugsweise quadratische Basiscodefläche von mehreren Kopiecodeflächen umrahmt, so dass X,Y-Toleranzen beim Auslesen der Codefläche ausgeglichen werden können. Dies lässt sich vorteilhaft dadurch realisieren, dass die Kopiecodeflächen ausgehend von der Basiscodefläche senkrecht und/oder waagrecht und/oder diagonal verschoben angeordnet sind, wobei die Verschiebungsstrecke vorteilhafterweise der Abmessung (Breite bzw. Höhe) der Basiscodefläche in Richtung der Verschiebung gesehen entsprechen sollte.

Weiterhin ist es von Vorteil, wenn die Kopiecodeflächen, gegebenenfalls durch eine Ruhezone getrennt, überlappungsfrei an die Basiscodefläche randseitig anschließen.

Eine vorteilhafte Ausgestaltung sieht vor, dass jede Kopiecodefläche die Basiscodefläche vollständig abbindet. Wenn die Positionstoleranzen begrenzt sind, ist es alternativ auch möglich, dass die Kopiecodeflächen durch Codesegmente bzw. Ausschnitte der Basiscodefläche gebildet sind, wobei die Codesegmente mindestens einen Kantenabschnitt der Basiscodefläche enthalten.

Um die Coderänder auch ohne Ruhezonen besser erfassen zu können, ist es von Vorteil, wenn die Kopiecodeflächen ausgehend von der Basiscodefläche alternierend invertiert und nicht-invertiert ausgeführt sind.

Vorteilhafterweise besitzt der Code durch optisch unterscheidbare, vorzugsweise helle und dunkle Module gebildete matrixartige Zeichen. Dies ermöglicht die kostengünstige Bereitstellung auch großer Datenmengen auf kleiner Fläche. Besonders vorteilhaft ist es, wenn der Code vorzugsweise als 2D-Matrix-Code einen Informationsgehalt von mindestens 100 bit, vorzugsweise von mindestens 500 bit besitzt.

Um den Bauaufwand für einen Leser zu reduzieren, ist es besonders bevorzugt, wenn der Code auf einen transparenten Träger aufgebracht ist und unter Durchleuchtung als Schattenwurf auf einer Sensorfläche auslesbar ist.

Alternativ ist es auch möglich, dass der Code durch eine reflektiv arbeitende Ausleseoptik erfassbar ist. Hierfür sollte der Code auf einem regulär (spiegelnd) reflektierenden Substrat aufgebracht sein, so dass das Licht zumindest überwiegend gerichtet reflektiert wird und nicht eine diffuse Reflexion bzw. Remission, wie sie z.B. an einer weiß pigmentierten Folie oder Beschichtung auftritt, erfolgt.

Um auch Winkelabweichungen kompensieren zu können, ist es günstig, wenn die Größe der Basiscodefläche das 0,5 bis 1,0-fache der Größe der Empfangsfläche einer den Code erfassenden Leseeinrichtung beträgt.

Eine weitere vorteilhafte Ausgestaltung sieht zur Leseverbesserung vor, dass der Code am Rand und/oder im Inneren vorzugsweise zeilen- und/oder spaltenförmige Abgleichmuster enthält.

Besonders bevorzugt ist die Testeinheit durch einen Abschnitt eines Testbands gebildet, wobei der Informationsträger auf einer das Testband enthaltenden Bandkassette angebracht ist. Denkbar ist aber auch die Anbringung derartiger Informationsträger auf einzelnen Testelementen, insbesondere auf Teststreifen für Körperflüssigkeiten.

Dadurch, dass der Informationsträger einen auf einem transparenten Substrat aufgebrachten Code aufweist und unter stationärer Durchleuchtung mittels der Lichtquelle als Schattenbild auf dem Sensor auslesbar ist, ergibt sich ein minimaler Aufwand an Bauteilen. Aufgrund der räumlich stationären Beleuchtung werden keine Scanner mit einer Abtastbewegung benötigt. Dadurch wird auch der mechanische Aufwand und die Lesesicherheit erheblich verbessert. Gegenüber dem herkömmlichen Einsatz von Kameras entfallen durch den optischen Direktkontakt durch Schattenwurf aufwändige Bauteile wie Linsen, Blenden und Tuben sowie deren Halterungen, und es wird der notwendige Kameraabstand für eine scharfe Abbildung eingespart. Zudem kann auch bei geringer Beleuchtungsstärke eine hohe Auflösung erreicht werden, wodurch feinere Codes mit höherer Informationsdichte einsetzbar sind.

Die erfindungsgemäße Anordnung toleriert vergleichsweise große Positionsabweichungen des Codes relativ zum Sensor. Dies ermöglicht eine kostengünstigere, weil weniger eng tolerierte Fertigung eines Geräts in dem ein Verbrauchsmittel mit einem solchen Code gehandhabt wird. Ebenso wird auch eine kostengünstige, weil weniger eng tolerierte Fertigung der mit dem Code versehenen Verbrauchsmittel ermöglicht. Die hohe Qualität der Abbildung des Codes erlaubt auch eine geringere Präzision bei der Ausführung des Codes. Damit werden kostengünstigere, insbesondere schnellere und gröber gerasterte Fertigungsverfahren bei der Codeherstellung akzeptabel.

Im Folgenden wird die Erfindung anhand der in der Zeichnung schematisch dargestellten Ausführungsbeispiele näher erläutert. Es zeigen
- Fig. 1: ein Blutzuckermessgerät mit einer auswechselbaren Testbandkassette und einer optischen Leseeinrichtung für einen Informationsträger an der Kassette in teilweise aufgebrochener Seitenansicht;
- Fig. 2: eine vergrößerte Darstellung der Leseeinrichtung und des Informationsträgers nach Fig. 1;
- Fig. 3 und 4: weitere Anordnungen einer Leseeinrichtung an einer Testbandkassette in einer Fig. 1 entsprechenden Darstellung;
- Fig. 4a und b: die Testbandkassette nach Fig. 1 in zwei perspektivischen Schmalseitenansichten;
- Fig. 5: einen Informationsträger bestehend aus einem transparenten Substrat und einem zweidimensionalen Data-Matrix-Code;
- Fig. 6: eine Ausführung des Matrix-Codes mit einer Basiscodefläche und umrahmenden Kopiecodeflächen;
- Fig. 7: eine weitere Ausführung des Matrix-Codes mit einer Basiscodefläche und abwechselnd invertierten und nichtinvertierten Kopiecodeflächen und darin symbolisiertem Sensorfenster der Leseeinrichtung.

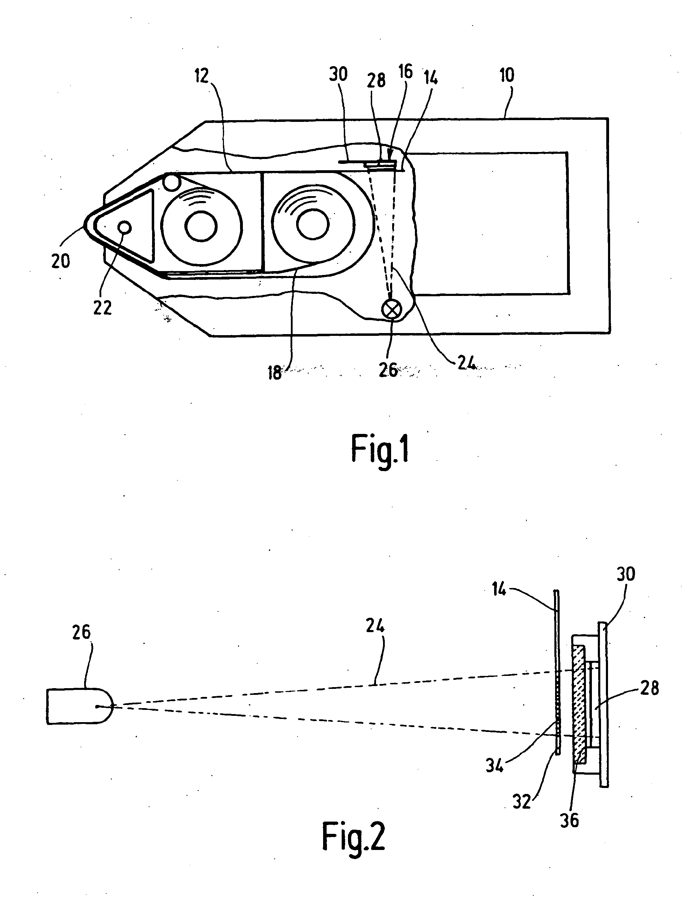

Das in Fig. 1 gezeigte Messgerät 10 ermöglicht den Einsatz einer Testbandkassette 12 als analytisches Verbrauchsmittel zur Durchführung von Blutzuckertests, wobei testspezifische Informationen auf einem Informationsträger 14 an der Kassette 12 mittels einer geräteeigenen Leseeinrichtung 16 auslesbar sind.

Die Testbandkassette 12 enthält ein Testband 18, welches abschnittsweise mit Testfeldem versehen ist, die an einer aus dem Gerät 10 herausragenden Spitze 20 mit Blut beaufschlagt werden können, um mittels der Messeinrichtung 22 vor Ort einen Blutzuckerwert bestimmen zu können. Durch Vorspulen des Testbands 18 lassen sich so eine Vielzahl von Tests durchführen, bevor die Kassette 10 verbraucht ist und ausgewechselt werden muss. Für weitere Einzelheiten von derartigen Handgeräten wird beispielhaft auf die EP 1424040 und DE 10348283 Bezug genommen.

Grundsätzlich ist der Einsatz des hier beschriebenen Informationsträgers und der zugehörigen Leseeinrichtung nicht auf solche Testbandkassetten beschränkt. Vielmehr lassen sich auch andere diagnostische bzw. analytische Testeinheiten damit versehen, insbesondere auch Teststreifen, wie sie derzeit für Untersuchungen an Körperflüssigkeiten eingesetzt werden. Der Einsatz ist auch vorteilhaft bei anderen medizinischen Verbrauchsmitteln, z. B. Dialysatoren, Schlauchsets, Infusionsbehältern und dergleichen, die in Geräten angewandt werden, und auch für Verbrauchsmittel in anderen Anwendungsgebieten wie z.B. Farb-, Drucker-, Schmiermittel-, Additiv-Kartuschen, Schleif- oder Schneidmittel, Proben- oder Werkstückträger, Formen oder Vorlagen wie z.B. Drucksiebe.

Wie in Fig. 1 und 2 gezeigt, befindet sich der Informationsträger 14 als Teil der Kassette 10 im Strahlengang (Lichtbündel 24) der Leseeinrichtung 16. Diese ümfasst eine Lichtquelle 26 und einen flächigen Sensor 28 auf einer Geräteplatine 30. Um ein möglichst einfaches System zu realisieren, wird auf eine abtastende Relativbewegung des Ausleselichts und des Informationsträgers 14 verzichtet und stattdessen ein einfacher Schattenwurf des Codes auf dem Informationsträger erfasst. Zu diesem Zweck weist der Informationsträger 14 ein für das Ausleselicht durchlässiges Substrat 32 und einen darauf aufgebrachten, weiter unten näher beschriebenen grafischen Code 34 auf. Dieser wird beim Auslesen durch das stationäre, d.h. räumlich nicht bewegte Lichtbündel 24 als Schattenbild über das Eintrittsfenster 36 auf die Empfangsfläche des Sensors 28 geworfen, ohne dass eine abbildende Optik eingesetzt wird.

Um hierbei eine möglichst hohe Auflösung zu erreichen, ist es günstig, wenn die Lichtquelle 26 als Punktlichtquelle in großem Abstand zu dem Informationsträger 14, verglichen mit dessen Abstand zu dem Sensor 28, angeordnet ist, wobei bei letzterem möglichst ein Direktkontakt zwischen Substrat 32 und Eintrittsfenster 36 anzustreben ist.

Als Punktlichtquelle 26 wird eine Lichtquelle angesehen, die sich durch geringe Ausdehnung der Licht emittierenden Fläche auszeichnet, oder die durch optische Elemente eine vergleichbare Abstrahlcharakteristik aufweist. Dafür eignen sich besonders Licht emittierende Dioden (LED), aber auch Glühlampen, Laserdioden, Gasentladungslampen und dergleichen sowie Lichtleiter können in geeigneter Bauform eingesetzt werden. Die Wellenlänge des Lichts zur Beleuchtung ist nur durch die Empfindlichkeit des optischen Sensors und die Materialeigenschaften des Informationsträgers 14 begrenzt. Bevorzugt wird sichtbares Licht eingesetzt, besonders bevorzugt rotes Licht, da die kostengünstigsten LED in diesem Wellenlängenbereich arbeiten.

Je geringer die Ausdehnung und je größer die Entfernung der Lichtquelle 26 ist, und je geringer der Abstand des Sensors 28 von der dem Informationsträger 14 ist, desto schärfer wird die Abbildung der Codemodule auf der Oberfläche des Sensors 28. Eine scharfe Abbildung ermöglicht ein sicheres Erkennen schon bei geringem Oversampling. Oversampling bezeichnet das Vielfache an Pixeln, das notwendig ist, um ein Codeelement sicher zu erkennen. Einfaches Oversampling bedeutet, dass pro Codeelement ein Pixel auf dem Sensor zur Verfügung steht. Zweifaches Oversampling bedeutet, dass für jede Kantenlänge oder Strichdicke des Codes 34 zwei Pixel zur Verfügung stehen. Je höher das Oversampling gewählt wird, desto geringere Abbildungsqualitäten und Positionsgenauigkeiten sind für ein sicheres Auslesen notwendig. Die Zahl der Pixel steigt jedoch quadratisch mit dem Oversampling. Damit steigt auch die Datenmenge, die ausgelesen, gespeichert und verarbeitet werden muss. Dies erfordert sowohl ausreichend dimensionierte Hardwarebausteine als auch längere Verarbeitungszeit und/oder schnellere Prozessoren. Aus Kostengründen ist daher ein minimales Oversampling anzustreben.

Der lichtempfindliche Sensor ist bevorzugt ein CMOS-Sensor, alternativ kann auch ein CCD-Sensor eingesetzt werden. Die lichtempfindliche Oberfläche sorcher Sensoren besteht aus einer Vielzahl von Pixeln, die im Einzelnen die lokale Helligkeit aufnehmen. Bei Beleuchtung des Codes 34 durch die Punktlichtquelle 26 behindern die Module bzw. Elemente des Codes 34 den Lichtdurchtritt, während durch das transparente Substrat 32 das Licht nahezu ungehindert auf den lichtempfindlichen Sensor 28 trifft. Die so erzeugten Helligkeitsunterschiede werden von einer nicht gezeigten Elektronik der Leseeinrichtung 16 ausgelesen und können wieder zu einem Gesamtbild des Codes 34 verarbeitet werden. Die Elektronik kann auch Bausteine zur weiteren Bildverarbeitung umfassen, um den Code 34 in alphanumerische Zeichen zu dekodieren.

Die Position des Codes 34 im Verhältnis zum Sensor 28 kann vergleichsweise große Abweichungen tolerieren. Die Abweichungen in Richtung der Breite und der Höhe des Codes können durch Wahl einer gegenüber dem Code entsprechend vergrößerten lichtempfindlichen Fläche des Sensors 28 kompensiert werden. Abweichungen im Abstand zwischen Code 34 und Sensor 28 können durch geringe Ausdehnung und großen Abstand der Punktlichtquelle 26 und den Verzicht auf verzerrende optische Bauteile im Lichtpfad in ihrer Auswirkung klein gehalten werden.

Zur weiteren Reduktion der Positioniertoleranzen kann die Sensor-Baueinheit 28, 36 in einer flexiblen Aufhängung 30 gelagert werden. Damit lassen sich Abweichungen in der Seiten- und Höhenlage des Informationsträgers 14 minimieren, so dass eine kleinere lichtempfindliche Fläche des Sensors 28 ausreicht. Speziell wird durch eine federnde Aufhängung ein Kontakt zwischen Informationsträger 14 und der Oberfläche des Sensors 28 möglich, ohne eine Beschädigung zu riskieren, auch wenn die Kassette 12 in eine toleranzbehaftete Geräteaufnahme eingesetzt wird.

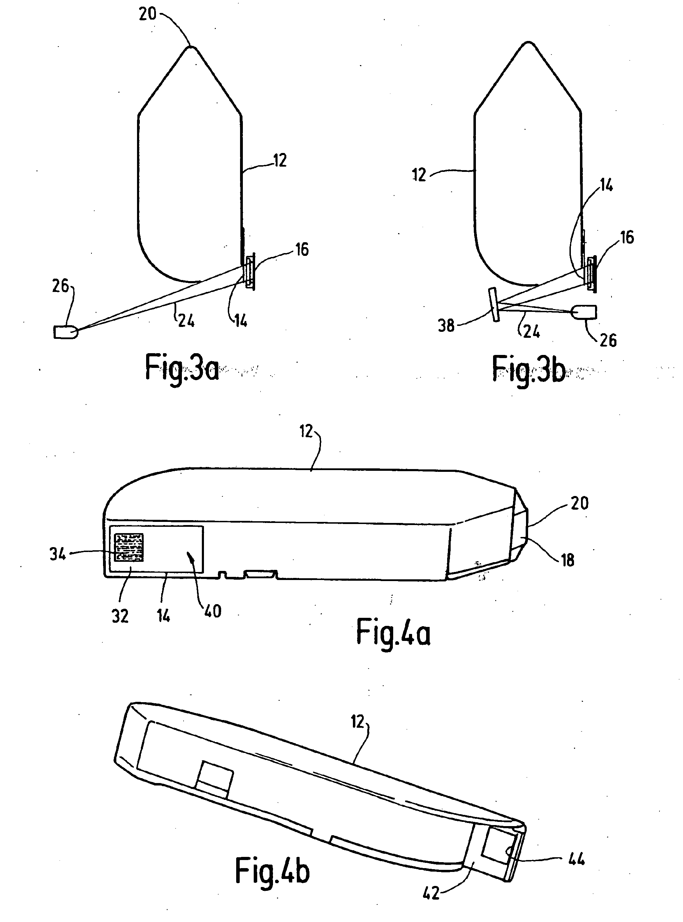

Wie oben ausgeführt, sollte die Punktlichtquelle 26 in möglichst großer Entfernung vom Informationsträger 14 positioniert werden. Dabei zeigte sich, dass eine orthogonale Anordnung zur Sensorfläche nicht notwendig ist. Entsprechend Fig. 3a kann die Lichtquell 26 auch seitlich veretzt angeordnet sein, so dass der Lichteinfall ohne Störkonturen durch das Verbrauchsmittel 12 günstig gewählt werden kann. Wie in Fig. 3b gezeigt, kann durch einen Spiegel 38 oder ein anderes geeignetes optisches Element der einfallende Pfad des Lichtbündels 24 gefaltet werden, um die Baulänge klein zu halten. Ein solches optisches Element kann auch abbildende Eigenschaften umfassen, die aus einer ausgedehnten Lichtquelle eine virtuelle Punktlichtquelle bilden.

Wie in Fig. 4a gezeigt, kann der Informationsträger 14 in Form eines Klebeetiketts 40 auf der Kassette 12 aufgeklebt sein. Die Klebefläche kann im Bereich des Codes 34 ausgespart werden, oder es wird ein transparenter Kleber verwendet. Aus der rückseitigen Ansicht nach Fig. 4b ist ersichtlich, dass die Kassette 12 an einer abstehenden Trägerfahne 42 mit einem Fenster oder einer Aussparung 44 versehen ist, die von dem Etikett 40 überspannt ist und die somit eine ungestörte Beleuchtung des Codes 34 von der Rückseite her in den in Fig. 3 gezeigten Konfigurationen erlaubt.

Grundsätzlich ist es auch möglich, dass die Lichtquelle 26 innerhalb des zu codierenden Gegenstandes wirksam positioniert wird, beispielsweise indem optische Elemente wie Lichtleiter für eine geeignete Lichtführung eingesetzt werden. Denkbar ist es auch, dass eine Wandung des Gegenstandes als Substrat 32 transparent ausgeführt wird, so dass eine Durchleuchtung des Codes 34 möglich ist.

Der Code 34 kann somit auf dem zu codieren Gegenstand 12 selbst, oder auf einem Etikett 40, das im Herstellprozess mit dem Gegenstand 12 verbunden wird, erzeugt werden. Zur Herstellung des Codes 34 kommen bevorzugt Druckverfahren wie Thermotransferdruck, Siebdruck, Offsetdruck, Laserdruck und Inkjet in Frage. Daneben sind auch Lasergravur, Laserablation, Filmbelichtung und -entwicklung, Bedampfung, Sublimationsverfahren und andere geeignete Verfahren anwendbar. Der Kontrast zur Darstellung des Codes 34 kann somit durch Farbstoffe oder Pigmente, wie in Druckfarbe oder photografischen Filmen enthalten, durch Metallschichten, durch Materialveränderung wie Verfärbung, Verkohlung, durch Licht streuende Phasengrenzflächen (z.B. Poren) oder in anderer geeigneter Weise erzeugt werden. Der Code kann entweder als Positiv, mit dunklen Modulen oder invertiert als Negativ, mit transparenten Modulen ausgeführt werden. Der Code kann ein eindimensionaler oder zweidimensionaler Barcode, Strichcode, Punktcode oder eine Ableitung davon sein. Bevorzugt wird ein so genannter Data Matrix Code (ECC200) in der nachstehend beschriebenen Ausführung eingesetzt. Weitere Details zu Data Matrix Codes finden sich beispielsweise in den US-Patenten 4,939,354;5,053,609;5,124,536.

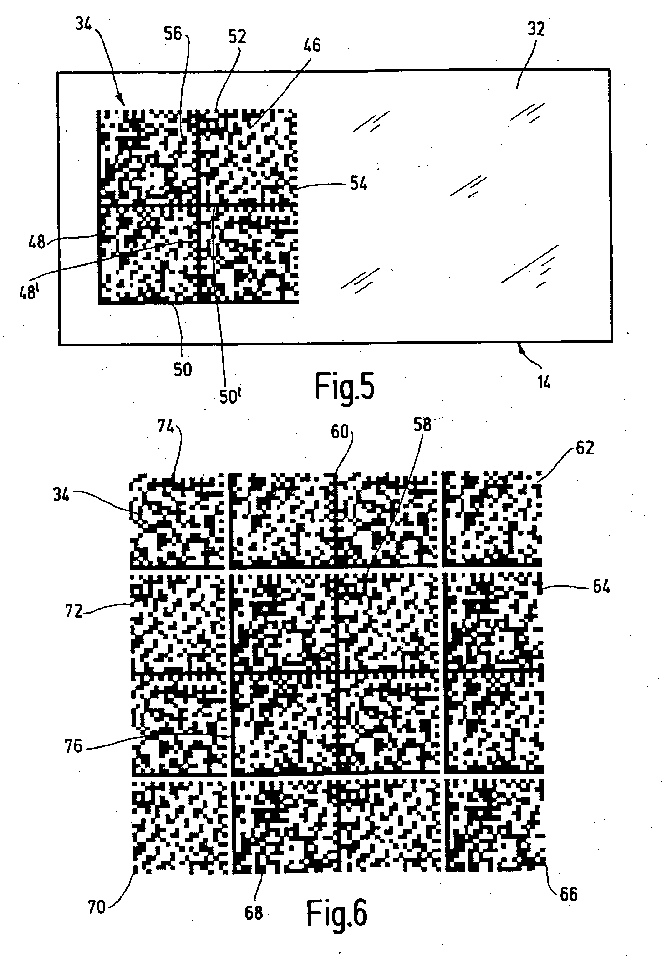

Fig. 5 zeigt einen Informationsträger 14 bestehend aus einem transparenten Substrat 32 und einem darauf aufgebrachten zweidimensionalen grafischen Code 34 in Form eines Data Matrix Codes. Dieser ist als quadratische Matrix aus dunklen Rastermodulen 46 gebildet. Um die Orientierung und Moduldichte bestimmen zu können, sind an zwei aneinander angrenzenden Kanten bzw. Quadratseiten eine durchgehende dunkle Zeile 50 bzw. Spalte 48 vorgesehen, während die beiden übrigen Kanten 52, 54 abwechselnd dunkle und helle Module aufweisen, wobei die rechte obere Ecke immer hell ist. Diese so genannten Abgleichmuster können wie gezeigt auch im Inneren der Codefläche 56 wiederholt werden (Zeile 50' bzw. Spalte 48').

Data Matrix Codes 34 sind winkeltolerant, d.h. sie können gegenüber einer Bezugsausrichtung um beliebige Winkel gedreht abgelesen und ausgewertet werden. Beim Auslesen eines solchen Codes im Direktkontakt, wie oben beschrieben, ist es notwendig, einen Sensor 28 zu verwenden, dessen optisch empfindliche Fläche mindestens um die horizontale und vertikale Positionstoleranz größer ist als die Kantenlänge des Codes selbst. Ist der Sensor nicht parallel zu den Kanten des Codes ausgerichtet, so muss anstelle der Kantenlänge des Codes die Projektion der Diagonalen berücksichtigt werden, das ist bei beliebiger Winkellage maximal das 1,41-fache der Kantenlänge. Werden nur geringe Drehwinkel erwartet, kann auch auf eine vollständige Abbildung des Codes auf der optisch empfindlichen Fläche des Sensors unter Ausnutzung der Fehlertoleranz eines Data Matrix Codes oder eines ähnlichen Codes mit Fehlerkorrektur verzichtet werden.

Um in diesem Zusammenhang einen positionstoleranten Code zu schaffen, der auch mit kleineren und damit kostengünstigen Sensoren zuverlässig ausgelesen werden kann, ist eine ausgedehnte Codefläche vorgesehen, wie sie in Fig. 6 dargestellt ist. Der Code 34 weist hier eine der Darstellung in Fig. 5 entsprechende Basiscodefläche 58 auf, die von mehreren daran angrenzenden Kopiecodeflächen 60,62,64,66,68,70,72,74 umrahmt ist. Die Kopiecodeflächen 60 - 74 werden ausgehend von der Basiscodefläche 58 jeweils nur in einer Richtung so weit senkrecht, waagrecht und diagonal verschoben, dass sie ohne Überlappung zweckmäßig unter Ausbildung eine Ruhezone 76 von bevorzugt mindestens der Abmessung (Breite bzw. Höhe) eines Codeelementes an die Grenzen des Basiscode anschließen. Dabei sind die Kopiecodeflächen durch die jeweils senkrecht, waagrecht und diagonal abgewandten Randsegmente der Basiscodefläche gebildet. Beispielsweise entspricht die Kopiecodefläche 60 der unteren Hälfte der Basiscodefläche 58, während die Kopiecodefläche 66 mit dem linken oberen Viertel der Basiscodefläche 58 übereinstimmt.

Durch das Vorliegen von Kopien am Basiscode kann ein optisch empfindlicher Sensor 28 von der Größe der Basiscodefläche 58 alle Informationen des Basiscode erfassen, unabhängig von der relativen Positionsabweichung. Voraussetzung dafür ist naturgemäß, dass die Ausdehnung des Codes 34 so groß ist, dass der Erfassungsbereich des Sensors 28 nicht über den Rand des Codes 34 hinausragt.

Der Basiscode wird rekonstruiert, indem die Leseeinrichtung 16 zunächst den Ursprung des Koordinatensystems des Codeabbildes ermittelt, Dies wird zunächst für die Ausführung mit einer Ruhezone erläutert. Für die Erläuterung gilt die Konvention: Ein beleuchtetes Pixel ergibt den Wert 1, ein abgeschattetes Pixel ergibt den Wert 0. Durch einen vorgeschalteten Diskriminator, z.B. einen Schmitt-Trigger werden Zwischenwerte verhindert.

Es werden zunächst alle Spalten und Zeilensummen gebildet und Minima und Maxima der Mittelwerte bestimmt. Durch inkrementelle virtuelle Verdrehung der Pixeldaten werden diese ersten Minima und Maxima auf die absoluten Minima und Maxima der Mittelwerte gebracht. Am Ursprung des Koordinatensystems des Codeabbildes kreuzen sich jeweils mehrere Spalten mit Maximalwert des Spaltenmittelwerts, benachbart von mehreren Spalten mit Minimalwert des Spaltenmittelwerts mit mehreren Zeilen mit Maximalwert des Zeilenmittelwerts, benachbart von mehreren Zeilen mit Minimalwert des Zeilenmittelwerts. Der Schnittpunkt der Übergänge von Minimalwert zu Maximalwert bei den betreffenden Spalten und Zeilen ist der Ursprung. Identifiziert die Leseeinrichtung 16 mehr als einen solchen Schnittpunkt, dann wird derjenige mit dem kleinsten x- und dem kleinsten y- Wert der Koordinaten auf dem Sensor 28 als Ursprung des Koordinatensystems des Codeabbildes festgelegt.

Im Codebild nach Fig. 6 befinden sich neben den Ruhezonen 76 jeweils eine Spalte bzw. Zeile mit alternierend hellen und dunklen Codeelementen. Bei der Rekonstruktion des Basiscodes in einem Prozessor (nicht gezeigt) wird sowohl in x- Richtung als auch in y- Richtung der mittlere Abstand zwischen einem hell/dunkel Übergang ermittelt. Damit ist die Zahl der Pixel bekannt, die der Kantenlänge eines Codeelementes entsprechen. Unter Berücksichtigung der ermittelten Verdrehung und der Kantenlänge werden ausgehend vom Ursprung die Pixelwerte zeilenweise in ein komplettes orthogonal ausgerichtetes Codebild in einem Speicher überführt. Auf dieses virtuelle Codebild werden die Decodieralgorithmen angewandt, um den Codeinhalt in digital nutzbarer Form zu erhalten.

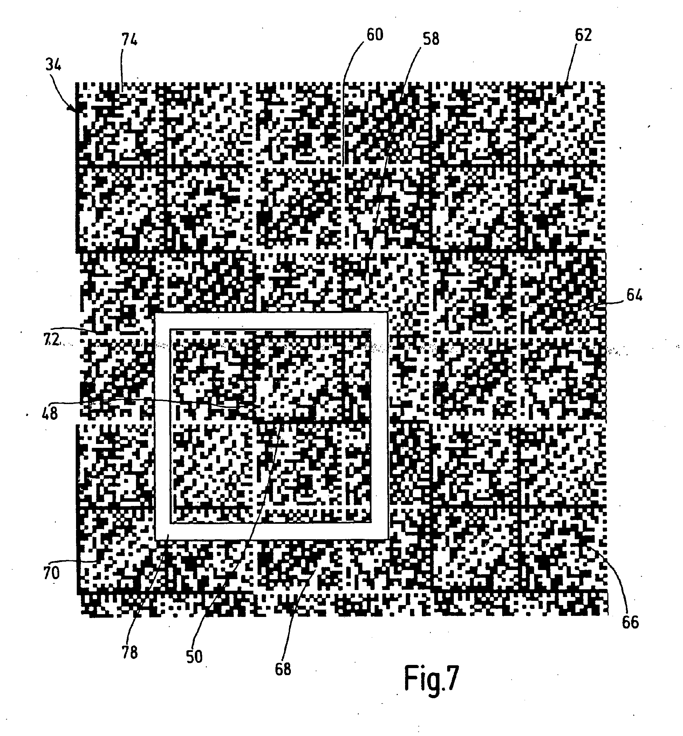

Bei dem in Fig. 7 gezeigten Ausführungsbeispiel ist die Basiscodefläche 58 von vollständigen Kopien 60 - 74 umrahmt. Die Kopien 60 - 74 sind ausgehend von der Basiscodefläche 58 so weit senkrecht, waagrecht und diagonal verschoben, dass sie exakt, lückenlos und ohne Überlappung an die Codekanten anschließen. Es ergibt sich ein 2D-Code mit der dreifachen Kantenlänge und der 9-fachen Fläche der Basiscodefläche 58. Um hier die Abgleichmuster unter Vermeidung von Ruhezonen einfach erkennen zu können, sind die Kopien 60 - 74 ausgehend von der Basiscodefläche 58 alternierend invertiert und nicht invertiert ausgeführt. Als invertiert werden die Kopien 60,64,68,72 bezeichnet, bei denen die im Original 58 dunkel ausgeführten Module hell und die im Original hell ausgeführten Module dunkel sind. Es ergibt sich so ein schachbrettartiges Muster von nicht invertierten und invertierten Basiscodes.

Wenn die Abgleichmuster 48, 50 der Basiscodefläche 58 dunkel ausgeführt sind, dann werden die Abgleichmuster der invertierten Kopien hell und somit klar unterscheidbar. Dunkle Winkel aus den Abgleichsmustem 48, 50 liegen an der linken unteren Ecke einer nicht invertierten Codefläche 58; 62,66,70,74. Helle Winkel hingegen liegen an der linken unteren Ecke einer invertierten Codefläche 60,64,68,72. Ebenso liegt eine Kreuzung von dunklen Linien im Inneren einer nicht invertierten Codefläche, und eine Kreuzung von hellen Linien im Inneren einer invertierten Codefläche. Eine dunkle T-Formation befindet sich am Rand einer nicht invertierten Codefläche, und eine helle T-Formation am Rand einer invertierten Codefläche. Mit diesen Informationen ist es möglich, bei jeder Position des in Fig. 7 durch ein Lesefenster 78 dargestellten Sensors 28, solange sie nicht über den Rand des Codes 34 hinaus reicht, die Basiscodefläche 58 zu rekonstruieren und für die Decodierung bereitzustellen.

Die erfindungsgemäße Codevervielfältigung ist nicht nur auf den oben beschriebenen Kontaktmodus beschränkt, sondern kann auch beim Auslesen von Codes 34 über eine abbildende Optik im Sinne einer Erhöhung der Positionstoleranz vorteilhaft eingesetzt werden. Auch dort kann sich beim Einwechseln eines Verbrauchsmittels 12 die Notwendigkeit ergeben, den auszulesenden Informationsträger innerhalb einer gewissen Toleranz genau zu positionieren. Insbesondere bei gerätefest installierten Lesern, die nur wenig verschiedene Codetypen lesen müssen, erlaubt die Verwendung der vorgeschlagenen Codekopien den Einsatz kleinerer und damit kostengünstigerer optischer Sensoren.

## Patentansprüche

1. Analysesystem, insbesondere tragbares Blutzuckermessgerät, mit mindestens einer Testeinheit (18) als Verbrauchsmittel zur Applikation einer Probe, einem Informationsträger (14), welcher einen durch grafische Zeichen gebildeten zweidimensionalen Code (34) zur maschinenlesbaren Bereitstellung von testspezifischen Informationen umfasst, und einer optischen Leseeinrichtung (16) für den Code (34), **dadurch gekennzeichnet, dass** der Code (34) eine die Informationen enthaltende Basiscodefläche (58) und mindestens eine daran angrenzende, die Information zumindest eines Ausschnitts der Basiscodefläche (58) vervielfältigende Kopiecodefläche (60-74) aufweist, wobei die mindestens eine Kopiecodefläche (60-74) an die Basiscodefläche (58) randseitig anschließt und die Ausdehnung des Codes (34) so groß ist, dass der Erfassungsbereich eines den Code (34) erfassenden Sensors (28) der Leseeinrichtung (16) nicht über den Rand des Codes (34) hinausragt.

2. Analysesystem nach Anspruch 1, **dadurch gekennzeichnet, dass** die vorzugsweise quadratische Basiscodefläche (58) von mehreren Koplecodeflächen (60-74) umrahmt ist.

3. Analysesystem nach Anspruch 1 oder 2, **dadurch gekennzeichnet, dass** die Kopiecodeflächen (60-74) ausgehend von der Basiscodeftäche (58) senkrecht, waagrecht und/oder diagonal verschoben sind.

4. Analysesystem nach einem der Ansprüche 1 bis 3, **dadurch gekennzeichnet, dass** die mindestens eine Kopiecodefläche (60-74), gegebenenfalls durch eine Ruhezone (76) getrennt, überlappungsfrei an die Basiscodefläche (58) randseitig anschließt.

5. Analysesystem nach einem der Ansprüche 1 bis 4, **dadurch gekennzeichnet, dass** jede Kopiecodefläche (60-74) die Basiscodefläche (58) vollständig abbildet.

6. Analysesystem nach einem der Ansprüche 1 bis 4, **dadurch gekennzeichnet, dass** die Kopiecodeflächen (60-74) durch Codesegmente der Basiscodefläche (58) gebildet sind, wobei die Codesegmente mindestens einen Kantenabschnitt der Basiscodefläche (58) enthalten.

7. Analysesystem nach einem der Ansprüche 1 bis 6, **dadurch gekennzeichnet, dass** die Kopiecodeflächen (60-74) ausgehend von der Basiscodefläche (58) alternierend invertiert und nicht-invertiert ausgeführt sind.

8. Analysesystem nach einem der Ansprüche 1 bis 7, **dadurch gekennzeichnet, dass** der Code (34) durch optisch unterscheidbare, vorzugsweise helle und dunkle Module (46) gebildete matrixartige Zeichen aufweist.

9. Analysesystem nach einem der Ansprüche 1 bis 8, **dadurch gekennzeichnet, dass** der Code (34) vorzugsweise als 2D-Matrix-Code (34) einen Informationsgehalt von mindestens 100 bit, vorzugsweise von mindestens 500 bit besitzt.

10. Analysesystem nach einem der Ansprüche 1 bis 9, **dadurch gekennzeichnet, dass** der Code (34) auf einem transparenten Substrat (32) aufgebracht ist und unter Durchleuchtung als Schattenwurf auf einem flächigen Sensor (28) auslesbar ist.

11. Analysesystem nach einem der Ansprüche 1 bis 10, **dadurch gekennzeichnet, dass** der Code (34) durch eine reflektiv arbeitende Ausleseoptik erfassbar ist.

12. Analysesystem nach einem der Ansprüche 1 bis 11, **dadurch gekennzeichnet, dass** die Größe der Basiscodefläche (58) das 0,5 bis 1,0-fache der Größe der Sensorfläche einer den Code (34) erfassenden Leseeinrichtung (16) beträgt.

13. Analysesystem nach einem der Ansprüche 1 bis 12, **dadurch gekennzeichnet, dass** der Code (34) vorzugsweise zeilen- und/oder spaltenförmige Abgleichmuster (48,50) zur Erfassung seiner Anordnung enthält.

14. Analysesystem nach einem der Ansprüche 1 bis 13, **dadurch gekennzeichnet, dass** die Testeinheit (18) durch einen Abschnitt eines Testbands gebildet ist, und dass der Informationsträger (14) auf einer das Testband enthaltenden Bandkassette (12) angebracht ist.

## Claims

1. Analytical system, especially portable blood sugar measuring device, comprising at least one test unit (18) as disposable provided for applying a sample, an information carrier (14) which comprises a two-dimensional code (34) formed by graphic symbols for the machine-readable provision of test-specific information, and an optical reading device (16) for the code (34), **characterized in that** the code (34) has a base code area (58) containing the information and at least one adjoining copy code area (60-74) which copies the information of at least a section of the base code area (58), wherein the at least one copy code area (60-74) adjoins the edge of the base code area (58) and the dimensions of the code (34) are so large that the detection area of a sensor (28) of the reading device (16) detecting the code (34) does not extend beyond the edge of the code 34.

2. Analytical system according to claim 1, **characterized in that** the preferably quadratic base code area (58) is framed by several copy code areas (60-74).

3. Analytical system according to claim 1 or 2, **characterized in that** the copy code areas (60-74) are vertically, horizontally and/or diagonally displaced starting from the base code area (58).

4. Analytical system according to one of the claims 1 to 3, **characterized in that** the at least one copy code area (60-74) adjoins the edge of the base code area (58) without overlap and optionally separated by a quiet zone (76).

5. Analytical system according to one of the claims 1 to 4, **characterized in that** each copy code area (60-74) is a complete image of the base code area (58).

6. Analytical system according to one of the claims 1 to 4, **characterized in that** the copy code areas (60-74) are formed by code segments of the base code area (58) where the code segments contain at least one edge section of the base code area (58).

7. Analytical system according to one of the claims 1 to 6, **characterized in that** starting from the base code area (58), the copy code areas (60-74) are alternately in an inverted and non-inverted form.

8. Analytical system according to one of the claims 1 to 7, **characterized in that** the code (34) has matrix-like symbols formed by optically distinguishable, preferably light and dark modules (46).

9. Analytical system according to one of the claims 1 to 8, **characterized in that** the code (34), preferably as a 2D matrix code (34), has an information content of at least 100 bit, preferably of at least 500 bit.

10. Analytical system according to one of the claims 1 to 9, **characterized in that** the code (34) is applied to a transparent substrate (32) and can be read under transillumination as a shadow image on a flat sensor (28).

11. Analytical system according to one of the claims 1 to 10, **characterized in that** the code (34) can be detected by an optical reading system that operates reflectively.

12. Analytical system according to one of the claims 1 to 11, **characterized in that** the size of the base code area (58) is 0.5-fold to 1.0-fold the size of the sensor area of a reading device (16) which detects the code (34).

13. Analytical system according to one of the claims 1 to 12, **characterized in that** the code (34) contains alignment patterns (48,50) preferably in the form of rows and/or columns in order to detect its alignment.

14. Analytical system according to one of the claims 1 to 13, **characterized in that** the test unit (18) is formed by a section of a test tape and that the information carrier (14) is applied to a tape cassette (12) containing the test tape.

## Revendications

1. Système d'analyse, en particulier appareil portable de mesure de glycémie, comprenant au moins une unité de test (18) comme moyen de consommation pour l'application d'un échantillon, un support d'information (14), qui comprend un code (34) en deux dimensions, formé par des symboles graphiques, pour la mise à disposition lisible à la machine d'informations spécifique au test, et d'un dispositif de lecture optique (16) pour le code (34), **caractérisé en ce que** le code (34) présente une surface de code de base (58) contenant les informations et au moins une surface de code de copie (60-74) contigüe à la première surface, reproduisant l'information d'au moins une partie de la surface de code de base (58), l'au moins une surface de code de copie (60-74) se raccordant côté bord à la surface de code de base (58) et l'extension du code (34) étant si grande que la zone d'enregistrement d'un capteur (28), enregistrant le code (34), du dispositif de lecture (16) ne dépasse pas du bord du code (34).

2. Système d'analyse selon la revendication 1, **caractérisé en ce que** la surface de code de base (58), de préférence carrée, est entourée par plusieurs surfaces de code de copie (60-74).

3. Système d'analyse selon la revendication 1 ou 2, **caractérisé en ce que** les surfaces de code de copie (60-74) sont décalées verticalement, horizontalement et/ou en diagonal à partir de la surface de code de base (58).

4. Système d'analyse selon l'une des revendications 1 à 3, **caractérisé en ce que** l'au moins une surface de code de copie (60-74), éventuellement séparée par une zone de repos (76), se raccorde côté bord sans chevauchement à la surface de code de base (58).

5. Système d'analyse selon l'une des revendications 1 à 4, **caractérisé en ce que** chaque surface de code de copie (60-74) reproduit complètement la surface de code de base (58).

6. Système d'analyse selon l'une des revendications 1 à 4, **caractérisé en ce que** les surfaces de code de copie (60-74) sont formées par des segments de code de la surface de code de base (58), les segments de code portant au moins une partie d'arête de la surface de code de base (58).

7. Système d'analyse selon l'une des revendications 1 à 6, **caractérisé en ce que** les surfaces de code de copie (60-74) sont en alternance inversées et non inversées à partir de la surface de code de base (58).

8. Système d'analyse selon l'une des revendications 1 à 7, **caractérisé en ce que** le code (34) présente des caractères de type matrice, formés par des modules (46) différenciables visuellement, de préférence clairs et foncés.

9. Système d'analyse selon l'une des revendications 1 à 8, **caractérisé en ce que** le code (34) présente de préférence sous forme de code de matrice en deux dimensions (34) une teneur en information d'au moins 100 bits, de préférence d'au moins 500 bits.

10. Système d'analyse selon l'une des revendications 1 à 9, **caractérisé en ce que** le code (34) est appliqué sur un substrat (32) transparent et peut être lu (28) avec éclairage sous forme de projection à ombre sur un capteur (28) plan.

11. Système d'analyse selon l'une des revendications 1 à 10, **caractérisé en ce que** le code (34) peut être enregistré par une optique de lecture travaillant par réflexion.

12. Système d'analyse selon l'une des revendications 1 à 11, **caractérisé en ce que** la grandeur de la surface de code de base (58) représente 0,5 à 1 fois la grandeur de la surface du capteur d'un système de lecture (16) enregistrant le code (34).

13. Système d'analyse selon l'une des revendications 1 à 12, **caractérisé en ce que** le code (34) contient des modèles d'alignement (48, 50), de préférence sous forme de lignes et/ou de colonnes, pour la détection de son agencement.

14. Système d'analyse selon l'une des revendications 1 à 13, **caractérisé en ce que** l'unité de test (18) est formée par une partie d'une bande test et **en ce que** le support d'information (14) est placé sur une cassette à bande (12) contenant la bande test.
